# EUROPÄISCHE PATENTANMELDUNG

(11) **EP 2 177 112 A1**
(43) Veröffentlichungstag der Anmeldung: **21.04.2010**
(21) Anmeldenummer: 09173252.9
(22) Anmeldetag: 16.10.2009
(51) Int. Cl.: A23L 1/236, A23L 1/22

(54) **Wässrige Süßungsmittelzusammensetzung**

(30) Priorität: 17.10.2008 DE 102008051787
(71) Anmelder: Nordzucker AG, 38100 Braunschweig (DE)
(72) Erfinder: Knuf, Detlev, 60327 Frankfurt, (DE); Nickel, Simone, 38114 Braunschweig, (DE)
(74) Vertreter: Ahrens, Gabriele

(57) **Zusammenfassung**

Die vorliegende Erfindung betrifft eine wässrige Süßungsmittelzusammensetzung auf Fructosebasis, die sich als Ersatz für Kristallzucker zum Süßen von Lebensmittelzubereitungen eignet und insbesondere im Süßeprofil dem Kristallzucker gleicht. Die Zusammensetzung enthält mindestens ein lebensmittelverträgliches Salz von mindestens einem Metall ausgewählt unter Natrium, Kalium und Magnesium.

## Beschreibung

Die vorliegende Erfindung betrifft eine wässrige Süßungsmittelzusammensetzung, die als Ersatz für Kristallzucker zum Süßen von Speisen und Getränken eingesetzt werden kann, und insbesondere für den Haushaltsbereich geeignet ist.

Wasserhaltige Süßungsmittel wie Zuckersirupe sind an sich bekannt.
So werden aromatisierte Zuckersirupe zum Verfeinern und Süßen von Süßspeisen und zur Zubereitung von Mixgetränken eingesetzt.
Im Vordergrund steht hier die spezielle Geschmacksrichtung, die dem Sirup durch Zusatz von Aromastoffen verliehen worden ist.

Beispielsweise wird Grenadine, ein Zuckersirup mit roter Farbe und Beerengeschmack, zum Aromatisieren und Färben von Cocktails benutzt.
Bekannt sind auch aromatisierte Sirupe unterschiedlichster Geschmacksrichtung zum Aromatisieren von Kaffee.

Diese aromatisierten Sirupe enthalten üblicherweise Saccharose, Aroma, Farbstoffe und bei Bedarf Fruchtsaftkonzentrate sowie Fruchtextrakte.
Aufgrund ihrer intensiven Aromen eigenen sich diese Sirupe nicht als Ersatzmittel für Kristallzucker zum geschmacksneutralen Süßen von Speisen und Getränken.

Es ist auch bekannt, als Ersatz für Rüben- oder Rohrzucker Glukosesirup zu verwenden, der eine enzymatisch oder chemisch aus kohlenhydratreichen Pflanzen wie Mais, Kartoffeln oder Weizen gewonnene konzentrierte Zuckerlösung ist. Glukosesirup wird vorwiegend in der industriellen Lebensmittelproduktion zum Süßen von Speisen und Getränken verwendet. In Energiegehaltwirkung ist der Glukosesirup ähnlich dem gewöhnlichen Haushaltszucker.

Da Glukosesirup eine zähflüssige mit Honig vergleichbare Konsistenz hat, ist er nur schwer dosierbar. Zudem lässt er sich nur schlecht mit dem Lebensmittelprodukt vermischen.
Wird Glukosesirup verdünnt zur Verbesserung der Fließfähigkeit, reduziert sich die Süßkraft. Zudem besteht das Risiko einer Kontamination mit Mikroorganismen, da die konservierende Wirkung von Glukose verringert wird.

Üblicherweise werden Zuckersirupe im Handel in Flaschen oder flaschenähnlichen Behältnissen angeboten. Diese Flaschen sind oftmals mit Schraubverschlüssen oder Verschlüssen mit Dosierhilfen versehen.
Ein Nachteil der Zuckersirupe ist, dass sie zur Kristallisation neigen. Die Kristallisation findet insbesondere im Bereich der Ausgussöffnungen statt, was mit der Zeit zu unschönen Zuckerverkrustungen an den Öffnungen führt.
Zum besseren Dosieren sind die Ausgussöffnungen oftmals klein gehalten, so dass durch die Kristallisation die kleinen Öffnungen verkleben können.

US Statutory Invention Registration H859 beschreibt ein Getränkekonzentrat mit Fruchtaroma, das 45 bis 80 Gew% Fructose, 15-20 Gew% Wasser und 1-20 Gw% Aromastoff enthält. Es sollte ein derartiges Konzentrat bereitgestellt werden, das einerseits ohne Aufbewahrung in einem Kühlschrank haltbar ist, andererseits auch im gekühlten Zustand noch gießfähig ist. Da die Kristallisationsneigung und die dadurch verursachte Erhärtung mit Zunahme der Fructosekonzentration ansteigt, sollte jedoch der Gehalt an Fructose zwischen 50-65 Gew% liegen, um die gewünschte Gießfähigkeit auch in gekühltem Zustand beizubehalten. Neben den drei Hauptbestandteilen werden als optionale Komponenten eine Reihe weiterer Zutaten genannt, unter anderem auch Salze im Allgemeinen, ohne dass jedoch eine konkrete Beschreibung dieser optionalen weiteren Komponenten gegeben wird. Das Getränkekonzentrat kann neben Fructose auch andere Zucker enthalten. Vorzugsweise sollte das Getränkekonzentrat jedoch im Wesentlichen Fructose aufweisen, um eine Übersüßung zu vermeiden.

US 5,445,837 bezieht sich auf eine Süßstoff-Ergänzungsmittelzusammensetzung mit bioverfügbarem Kalzium enthaltend 5-80 % Zucker, bezogen auf das Trockengewicht, wobei mindestens 15 % davon, bezogen auf das Trockengewicht, Fructose ist. Dem US-Patent liegt das Problem zugrunde, den Kalziumgehalt in Lebensmitteln und Getränken zu erhöhen, um die Kalziumversorgung der Konsumenten zu verbessern. Die Erhöhung der Kalziumkonzentration wird hier durch Zusatz des Süßstoff-Ergänzungsmittelzusammensetzung bewirkt, die Kalzium in bioverfügbarer Form enthält. Hierzu muss Kalzium in Form eines Salzes vorliegen, das im Magen-Darm-Trakt löslich ist, auf der anderen Seite aber aus der Süßstoff-Ergänzungsmittelzusammensetzung nicht vorzeitig ausfällt. Es wird daher vorgeschlagen, Kalzium in Form von anorganischen Salzen wie Chlorid, Sulfat, Nitrat oder aber auch als Acetat zuzusetzen, und zum Schutz von vorzeitiger Ausfällung, Zitronensäure und Äpfelsäure zuzugeben, wobei die Zitronensäure und Äpfelsäure im Überschuss zur Kalziumkonzentration zugesetzt wird.

Es war Aufgabe der vorliegenden Erfindung eine wässrige Süßungsmittelzusammensetzung bereit zu stellen, die als Ersatz von Haushaltszucker zum Süßen von Speisen und Getränken eingesetzt werden kann, einfach zu Dosieren ist, sich problemlos vermischen lässt, gute Haltbarkeit hat, so gut wie keine Kistallisationsneigung aufweist und insbesondere für die Verwendung im Haushalt geeignet ist.

**Diese Aufgabe wird gelöst durch eine wässrige** Süßungsmittelzusammensetzung mit einem Trockensubstanzgehalt von 70 bis 90 Gewichtsprozent, Rest Wasser, mit 50 bis 99,99 Gewichtsprozent Fructose bezogen auf den Trockensubstanzgehalt, 0 bis 10 Gewichtsprozent Dextrose bezogen auf den Trockensubstanzgehalt, 0 bis 40 Gewichtsprozent Saccharose bezogen auf den Trockensubstanzgehalt, 0,001 bis 3 Gewichtsprozent bezogen auf den Trockensubstanzgehalt von mindestens einem lebensmittelverträglichen Salz von mindestens einem Metall ausgewählt unter Natrium, Kaliumund Magnesium.

Im Sinne der vorliegenden Erfindung bedeutet der Begriff "lebensmittelverträglich", dass die angegebene Substanz, vorstehend das Salz, für den menschlichen Verzehr geeignet ist.

Die erfindungsgemäße wässrige Süßungsmittelzusammensetzung hat eine flüssige bis leicht viskose Konsistenz und lässt sich sehr gut dosieren und vermischen.
Zudem hat sie einen rein süßen Geschmack und süßt die Lebensmittel ohne diesen einen Fremdgeschmack zu verleihen. Sie verteilt sich gut in den Zubereitungen und löst sich auch in kalten Zubereitungen ohne Weiteres auf.
Auf Grund ihrer Geschmackseigenschaften kann sie gleichermaßen als Süßungsmittel für Süßspeisen und für pikante Zubereitungen eingesetzt werden.
Zudem hat sich gezeigt, dass auch bei längeren Stehen keine beziehungsweise eine nur sehr geringfügige Kristallisationsneigung aufweist.

Sie kann wie üblicher Haushaltszucker zum Abrunden des Geschmacks von Lebensmittelzubereitungen verwendet werden wie zum Beispiel zur Verfeinerung von Suppen, Soßen, Braten, Joghurts, Desserts etc. Sie eignet sich auch zur Karamellisierung.

Die anliegende Figur zeigt das sensorische Profil einer erfindungsgemäßen Ausführungsform gegenüber Fructosesirup.

Wesentlicher Bestandteil der erfindungsgemäßen wässrigen Süßungsmittelzusammensetzung ist Fructose.
Da Fructose in Wasser eine hohe Löslichkeit aufweist und insbesondere hygroskopisch ist, zeigt Fructose auch bei vergleichsweise hohen Konzentrationen so gut wie keine Kristallisationstendenz. Nachteilig ist jedoch ihr als metallisch und kratzig empfundener Eigengeschmack auf Grund dessen Süßungsmittel auf Fructosebasis als unangenehm empfunden werden.

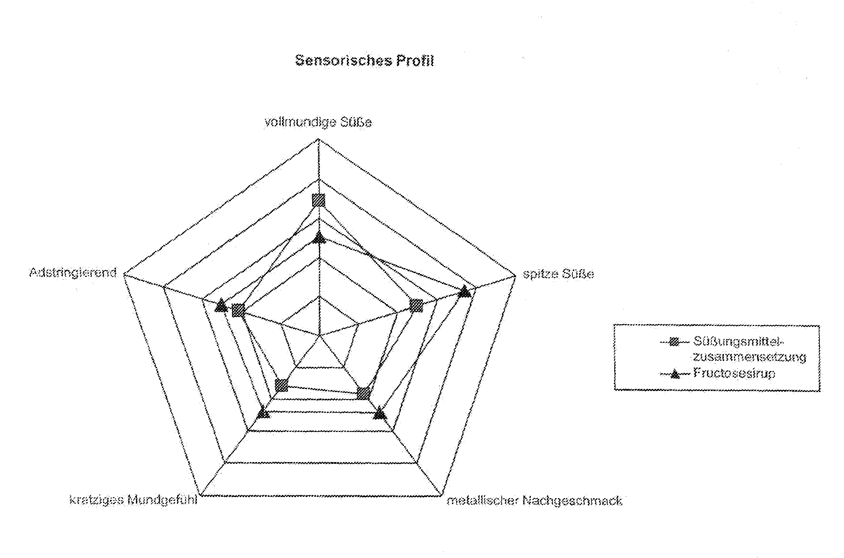

Erfindungsgemäß wurde nun gefunden, dass dieser als unangenehm empfundene Eigengeschmack durch den Zusatz von Salz eines Metalls wie Natrium, Kalium oder Magnesium beseitigt werden kann.
Überraschenderweise wurde gefunden, dass ein Süßungsmittel auf Fructosebasis, das ein derartiges Salz enthält, ein Süßeprofil ähnlich von Haushaltszucker aufweist. Der Vergleich des sensorischen Profils der erfindungsgemäßen Zusammensetzung und Fructose-Zucker wie er in der Figur dargestellt ist, belegt, dass die erfindungsgemäße Zusammensetzung eine gegenüber Fructose-Sirup vollmundigere Süße sowie deutlich geringeres kratziges Mundgefühl und metallischen Nachgeschmack aufweist. Zudem ist die sogenannte spitze Süße verringert und die erfindungsgemäße Zusammensetzung weniger adstringierend. Im Ergebnis ergibt sich damit, dass die sensorischen Eigenschaften der erfindungsgemäßen Zusammensetzung denen von Haushaltszucker entsprechen.

Der Gehalt an Salz in der erfindungsgemäßen Süßungsmittelzusammensetzung ist 0,001 bis 3,0 Gewichtsprozent, vorzugsweise 0,05 bis 1,5 Gewichtsprozent.
Beispiele für geeignete Salze sind die Chloride der genannten Metalle, insbesondere Natriumchlorid. Es können aber auch andere lebensmittelverträgliche Salze, wie zum Beispiel die lebensmittelverträglichen Sulfate der genannten Metalle, oder Mischungen verschiedener Salze eingesetzt werden.

Mit der vorliegenden Erfindung ist es daher möglich eine wässrige Süßungsmittelzusammensetzung zu erhalten, die ein Süßeprofil in Bezug auf Geschmack und Süßkraft aufweist, die dem von Haushaltszucker vergleichbar ist, und selbst bei Aufbewahrung im Kühlschrank so gut wie keine Tendenz zur Kristallisation zeigt. Sie kann daher direkt aus dem Kühlschrank heraus eingesetzt werden, da sie auch im gekühlten Zustand ausreichend fließfähig und im Wesentlichen frei von auskristallisierter Fructose ist.

Für die erfindungsgemäße wässrige Süßungsmittelzusammensetzung kann Fructose verwendet werden, die aus einer beliebigen Quelle stammt.
Die Fructose kann chemisch oder enzymatisch gewonnen werden.

Als besonders geeignet hat sich Fructosesirup erwiesen.
Fructosesirup wird unter anderem nach Spaltung der Saccharose und chromatografischer Abtrennung der Dextrose erhalten.

Dieser Fructosesirup kann unmittelbar für die Herstellung der Süßungsmittelzusammensetzung eingesetzt werden.
Gegebenenfalls ist der Wassergehalt an den Wassergehalt der erfindungsgemäßen Süßungsmittelzusammensetzung anzupassen. Hierfür wird der Fructosesirup je nach Wassergehalt entweder aufkonzentriert oder Wasser zur Verdünnung zugesetzt.

Als weiteren Bestandteil kann die erfindungsgemäße Süßungsmittelzusammensetzung 0,001 bis 5,0 Gewichtsprozent, vorzugsweise 0,005 bis 3,0 Gewichtsprozent aromagebende und/oder färbende Lebensmittel enthalten. Beispiele hierfür sind Karamellzuckersirup, Ahornsirup, Zuckerkulör, Apfelkonzentrat und Birnendicksaft. Es können auch lebensmittelverträgliche Aromastoffe zugesetzt werden. Diese Zusätze dienen zum Einstellen der Farbe und gegebenenfalls des Geschmackseindrucks, ohne jedoch der Süßungsmittelzusammensetzung einen in den Lebensmittelzubereitungen hervorstechenden Eigengeschmack zu verleihen.

Der Wassergehalt der erfindungsgemäßen flüssigen Süßungsmittelzusammensetzung beträgt 10 bis 30 Gewichtsprozent, vorzugsweise 15 bis 28 Gewichtsprozent. Bei diesen Wassergehalten weist die erfindungsgemäße wässrige Süßungsmittelzusammensetzung eine Viskosität von unter 1.000 mPa bei 25 °C auf.
Sie besitzt eine ausgezeichnete Fließfähigkeit und lässt sich daher sehr leicht dosieren.

Neben Fructose können in dem erfindungsgemäßen Süßungsmittel Dextrose in einem Gehalt von 0 bis 10 Gewichtsprozent, vorzugsweise 0 bis 5 Gewichtsprozent, und Saccharose in einem Gehalt von 0 bis 40 Gewichtsprozent, vorzugsweise 0 bis 10 Gewichtsprozent, jeweils bezogen auf den Trockensubstanzgehalt, enthalten sein. Diese können aus dem Herstellungsverfahren der Fructose stammen, stören jedoch das Süßeprofil und die sensorischen Eigenschaften des erfindungsgemäßen Süßungsmittels nicht.

Gemäß einer bevorzugten Ausführungsform setzt sich die erfindungsgemäße wässrige Süßungsmittelzusammensetzung aus 99,89 Gewichtsteilen Fructosesirup, 0,01 Gewichtsteil Herbarom AF 01, ein Apfelkonzentrat, und 0,10 Gewichtsteil NaCl zusammen. Der Frucosesirup hat einen Trockensubstanzgehalt von 75 Gewichtsprozent mit 96 Gewichtsprozent Fructose und 4 Gewichtsprozent Dextrose. In der anliegenden Abbildung ist das sensorische Profil dieser Ausführungsform im Vergleich zu dem reinen Fructosesirup dargestellt. Wie dieses Profil erkennen lässt, sind die nachteiligen Eigenschaften wie adstringierender Effekt, kratziges Mundgefühl, metallischer Nachgeschmack und spitze Süße gegenüber dem reinen Fructosesirup klar verbessert und darüber hinaus der vollmundige Süßeeindruck deutlich erhöht.

Die erfindungsgemäße wässrige Süßungsmittelzusammensetzung kann erhalten werden, indem Fructosesirup 0,001 bis 3 Gewichtsprozent von mindestens einem Salz von mindestens einem Metall ausgewählt unter Natrium, Kalium und Magnesium zugesetzt wird und, gegebenenfalls, der Wassergehalt derart eingestellt wird, dass der Trockensubstanzgehalt 70 bis 90 Gewichtsprozent beträgt.
Zur Einstellung des Wassergehalts kann Wasser zugesetzt werden oder die Zusammensetzung auf bekannte Art und Weise aufkonzentriert werden.

Die vorliegende Erfindung betrifft auch die Verwendung der erfindungsgemäßen wässrigen Süßungsmittelzusammensetzung als Süßungsmittel, insbesondere zum Süßen von Lebensmitteln und Getränken.

Für den Vertrieb kann die erfindungsgemäße wässrige Süßungsmittelzusammensetzung in haushaltsüblichen Mengen in beliebige flaschenähnliche Behälter abgefüllt werden.

Vorzugsweise erfolgt die Abfüllung in Flaschen aus Kunststoff. Als Verschluss kann ein beliebiger für derartige Produkte üblicher Verschluss gewählt werden.
Es kann ein Klappdeckelverschluss oder Schraubverschluss mit oder ohne Dosierhilfe sein.

## Patentansprüche

1. Wässrige Süßungsmittelzusammensetzung mit einem Trockensubstanzgehalt von 70 bis 90 Gewichtsprozent, wobei sich die Trockensubstanz zusammensetzt aus 50 bis 99,99 Gewichtsprozent Fructose, 0 bis 10 Gewichtsprozent Dextrose, 0 bis 40 Gewichtsprozent Saccharose sowie **0,001 bis 3 Gewichtsprozent von mindestens einem** lebensmittelverträglichen Salz von mindestens einem Metall ausgewählt unter Natrium, Kalium und Magnesium, jeweils bezogen auf den Trockensubstanzgehalt.

2. Wässrige Süßungsmittelzusammensetzung nach Anspruch 1,
zusätzlich enthaltend 0,001 bis 5,0 Gewichtsprozent bezogen auf den Trockensubstanzgehalt, aromagebende und/oder färbende lebensmittelverträgliche Zusätze.

3. Wässrige Süßungsmittelzusammensetzung nach Anspruch 2,
umfassend 90 bis 99,99 Gewichtsprozent Fructose, 0 bis 5 Gewichtsprozent Dextrose und 0 bis 10 Gewichtsprozent Saccharose, jeweils bezogen auf den Trockensubstanzgehalt.

4. Wässrige Süßungsmittelzusammensetzung nach einem der Ansprüche 1 bis 3, wobei das Salz ein Chloridsalz ist.

5. Wässrige Süßungsmittelzusammensetzung nach einem der Ansprüche 1 bis 4, wobei der aromagebende und/oder farbgebende lebensmittelverträgliche Zusatz mindestens ein Zusatz ausgewählt unter Karamellzuckersirup, Ahornsirup, Zuckerkulör, Apfelkonzentrat und Birnendicksaft ist.

6. Wässrige Süßungsmittelzusammensetzung nach einem der Ansprüche 1 bis 4, wobei die Fructosebasis Fructosesirup ist.

7. Wässrige Süßungsmittelzusammensetzung nach einem der vorhergehenden Ansprüche bestehend aus 99,89 Gewichtsteilen Fructosesirup, 0,01 Gewichtsteil Apfelkonzentrat und 0,10 Gewichtsteil Salz.

8. Verfahren zur Herstellung einer wässrigen Süßungsmittelzusammensetzung enthaltend Fructose, wobei Fructosesirup 0,001 bis 3 Gewichtsprozent von mindestens einem Salz von mindestens einem Metall ausgewählt unter Natrium, Kalium und Magnesium, bezogen auf den Trockensubstanzgehalt, zugesetzt wird, und gegebenenfalls der Wassergehalt derart eingestellt wird, dass der Trockensubstanzgehalt 70 bis 90 Gewichtsprozent beträgt.

9. Verfahren nach Anspruch 8,
wobei der wässrigen Süßungsmittelzusammensetzung zusätzlich 0,001 bis 5,0 Gewichtsprozent, bezogen auf den Trockensubstanzgehalt, aromagebende und/oder färbende lebensmittelverträgliche Zusätze zugesetzt werden.

10. Verfahren nach Anspruch 8 oder 9,
wobei als Salz ein Chloridsalz verwendet wird.

11. Verfahren nach einem der Ansprüche 8 bis 10,
wobei als aromagebender und/oder farbgebender lebensmittelverträglicher Zusatz mindestens ein Zusatz ausgewählt unter Karamellzuckersirup, Ahornsirup, Zuckerkulör, Apfelkonzentrat und Birnendicksaft verwendet wird.

12. Verwendung einer wässrigen Süßungsmittelzusammensetzung nach einem der Ansprüche 1 bis 7 als Süßungsmittel.
